# EUROPÄISCHE PATENTSCHRIFT

(11) **EP 0 764 797 B1**
(45) Veröffentlichungstag und Bekanntmachung des Hinweises auf die Patenterteilung: **03.11.1999**
(21) Anmeldenummer: 96111038.4
(22) Anmeldetag: 09.07.1996
(51) Int. Cl.: F16G 3/00

(54) **Verbindungsvorrichtung für profilbehaftete Antriebsmittel**
Connecting device for profiled driving elements
Dispositif de liaison pour organes de transmission profilés

(30) Priorität: 20.09.1995 DE 19534932
(43) Veröffentlichungstag der Anmeldung: 26.03.1997
(73) Patentinhaber: MARANTEC ANTRIEBS- UND STEUERUNGSTECHNIK GMBH & CO. PRODUKTIONS KG, D-33428 Marienfeld (DE)
(72) Erfinder: Hörmann, Michael, D-33790 Halle / Westf. (DE)
(74) Vertreter: Laufhütte, Dieter, Dr.-Ing.

(56) Entgegenhaltungen:
- WO-A-93/17257
- DE-A- 3 934 600
- DE-U- 8 905 227
- DE-U- 9 111 374
- DE-U- 29 505 345
- US-A- 3 652 116

## Beschreibung

Die Erfindung betrifft eine Verbindungsvorrichtung zur Aufnahme mindestens eines Endes eines profilbehafteten Antriebsmittels, vorzugsweise eines Zahnriemens oder einer Rollenkette, nach dem Oberbegriff des Anspruchs 1.

In Fällen, in denen ein Zahnriemen nicht in einem Zahnriemengetriebe umläuft, sondern nur begrenzte Stellbewegungen überträgt, ist es mitunter zweckmäßig, die Verbindung zu einem Zahnriemen oder zwischen zwei Zahnriemenenden durch einen Zahnriemenverbinder herzustellen. Ein solcher Zahnriemenverbinder muß zum einen die Enden eines Zahnriemens sicher verbinden, soll aber andererseits so ausgestaltet sein, daß die Verbindung leicht und schnell herstellbar und wieder lösbar ist.

Es ist ein Zahnriemenverbinder der gattungsgemäßen Art bekannt, der aus einem symmetrischen Mittelstück und zwei Hülsen besteht. Das Mittelstück weist ein negatives Abbild des Oberflächenprofils des Zahnriemens auf, in das der Zahnriemen eingreift. Zur Montage werden die Hülsen zunächst über die Enden des Zahnriemens geschoben, sodann werden die Zahnriemenenden in die Profilrillen des Mittelstücks eingelegt und schließlich werden die Hülsen zur Sicherung über das Mittelstück geschoben.

Ein derartiger Zahnriemenverbinder hat allerdings den Nachteil, daß die Herstellung verhältnismäßig aufwendig ist und daß die Montage aus mehreren Montageschritten besteht.

Aus der WO 93/17257 ist eine Verbindungsvorrichtung nach dem Oberbegriff des Anspruchs 1 bekannt. Bei einer Verbindungsvorrichtung dieser Bauart besteht die Gefahr, daß das profilbehaftete Antriebsmittel seitlich aus der Verbindungsvorrichtung herausrutscht.

Aufgabe der Erfindung ist es daher, eine Verbindungsvorrichtung zur formschlüssigen Verbindung mit einem profilbehafteten Antriebsmittel zu schaffen, die einfach herstellbar, leicht montierbar und dennoch gegenüber einem ungewollten Öffnen gesichert ist.

Ausgehend von einer Verbindungsvorrichtung der gattungsgemäßen Art wird diese Aufgabe erfindungsgemäß durch die kennzeichnenden Merkmale des Patentanspruchs 1 gelöst. Die erfindungsgemäße Lösung besteht darin, daß in Fügerichtung ein Anschlag vorgesehen ist, der die Lage des mit der Verbindungsvorrichtung zusammengefügten Zahnriemens definiert.

Dieser Anschlag kann aus einer durchgehenden Wandung, aus einzelnen Stegen oder auch aus kleinen Vorsprüngen bestehen. Vorzugsweise sind am gegenüberliegenden Rand der Verbindungsvorrichtung in den Profilrillen ebenfalls schmale Vorsprünge vorgesehen. Da der Zahnriemen eine gewisse Elastizität besitzt, können die Riemenzähne über diese Vorsprünge beim Zusammenfügen gepreßt werden. Im zusammengefügten Zustand bewirken die Vorsprünge dabei mit dem gegenüberliegenden Anschlag einen Formschluß in Fügerichtung, so daß der Zahnriemen während des Betriebes in der Verbindungsvorrichtung gesichert ist. Um den Zahnriemen wieder von der Verbindungsvorrichtung zu lösen, sind zweckmäßigerweise gegenüber den Vorsprüngen in dem Anschlag Bohrungen vorgesehen, durch die der Zahnriemen aus der Verbindungsvorrichtung wieder herausgetrieben werden kann.

Die Erfindung hat den Vorteil, daß die erfindungsgemäße Verbindungsvorrichtung bei minimalem Montageaufwand und einfacher Auswechselbarkeit einstückig ausgebildet ist. Hierdurch können Herstellungskosten und Montagekosten bei gleicher Zuverlässigkeit der Verbindung gesenkt werden.

Insbesondere kann die erfindungsgemäße Verbindungsvorrichtung so ausgestaltet sein, daß durch eine Fügebewegung sowohl Formschluß in Zugrichtung als auch Formschluß und/oder Kraftschluß in Fügerichtung zwischen dem Antriebsmittel und der Verbindungsvorrichtung herstellbar sind.

Vorzugsweise ist als profilbehaftetes Antriebsmittel ein Zahnriemen vorgesehen.

Statt der Vorsprünge können auch eine oder mehrere Schnappfedern vorgesehen sein, die den Zahnriemen in der Verbindungsvorrichtung in Fügerichtung sichern. Beim Zusammenfügen sind diese Schnappfedern durch die Riemenzähne herunterzudrücken, damit Zahnriemen und Verbindungsvorrichtung zusammengefügt werden können. Die Schnappfedern können dabei zum Beispiel aus einem einfachen Federdraht oder auch aus dem verwendeten Werkstoff der Verbindungsvorrichtung bestehen.

Nach einer bevorzugten Ausführungsform ist vorgesehen, daß das Innenprofil der Verbindungsvorrichtung derart gefertigt ist, daß ein paßgenauer Sitz zwischen Verbindungsvorrichtung und Zahnriemen zustandekommt. Durch die Reibung zwischen Verbindungsvorrichtung und Zahnriemen entsteht hierdurch ein Kraftschluß, der zur alleinigen oder auch zur zusätzlichen Sicherung des Zahnriemens in Fügerichtung dienen kann.

Nach einer weiteren bevorzugten Ausführungsform ist vorgesehen, daß der Zahnriemen längs zur Fügerichtung durch Stoffschluß gesichert ist. Die stoffschlüssige Verbindung kann zum Beispiel aus einer Klebeverbindung bestehen, wobei der Klebstoff vorzugsweise vor dem Zusammenfügen auf den Zahnriemen aufgetragen wird.

Die Verbindungsvorrichtung ist vorzugsweise symmetrisch aufgebaut, so daß zwei Enden eines Zahnriemens miteinander zu verbinden sind. Es ist allerdings auch denkbar, daß die Verbindungsvorrichtung an einem feststehenden Teil montiert ist und nur ein Ende eines Zahnriemens verbindet.

Je nach Anwendung kann die Verbindungsvorrichtung zum Beispiel aus Metall oder aus Kunststoff bestehen, vorzugsweise wird sie als Kunststoffspritzteil ausgeführt.

Weitere Einzelheiten und Vorteile der Erfindung werden anhand eines in der Zeichnung dargestellten Ausführungsbeispiels näher erläutert. In dieser zeigt:
- Fig. 1: eine Seitenansicht einer Verbindungsvorrichtung und
- Fig. 2: einen Längsschnitt durch die Verbindungsvorrichtung gemäß Fig. 1.

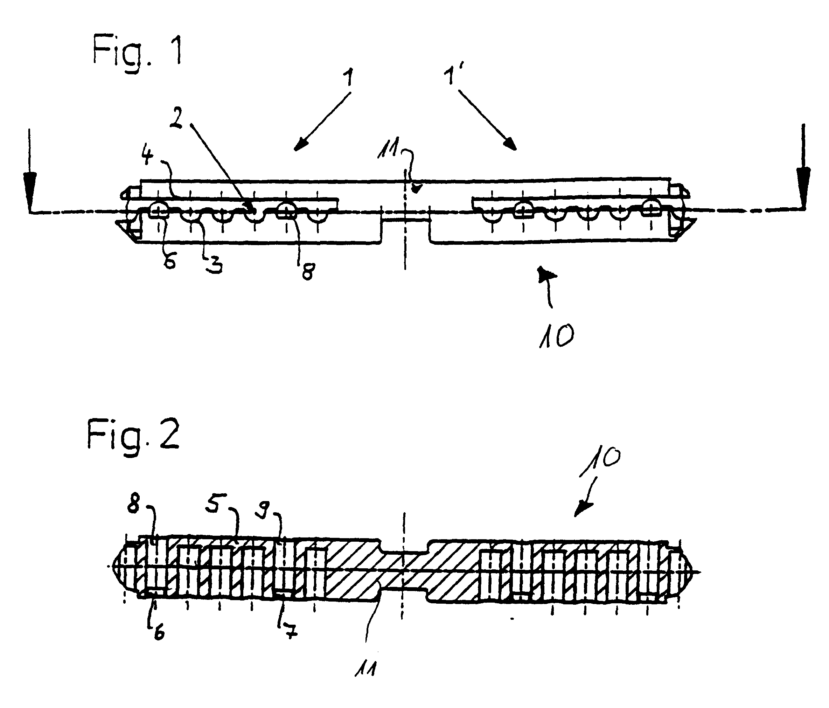

Die in Fig. 1 dargestellte Verbindungsvorrichtung 10 ist symmetrisch aufgebaut und besteht aus den Endteilen 1 und 1', die über ein Zwischenteil 11 miteinander verbunden sind. Die Endteile 1 und 1' sind jeweils gleich aufgebaut, so daß mittels der hier dargestellten Verbindungsvorrichtung 10 die beiden Enden eines Zahnriemens, der im einzelnen hier nicht in der Zeichnung dargestellt ist, verbunden werden können.

Die jeweiligen Endteile der Verbindungsvorrichtung 1 bzw. 1' weisen jeweils Schlitze 2 auf, die ein negatives Abbild des Oberflächenprofils des aufzunehmenden Zahnriemens bilden. Demnach sind auf einer Seite den Zähnen des Zahnriemens entsprechende Profilrillen 3 ausgenommen, während die gegenüberliegende Seite entsprechend der Oberfläche des Zahnriemens eine ebene Oberfläche 4 aufweist. In den Fig. 1 und 2 nicht näher dargestellte Zahnriemen wird nun mit der Verbindungsvorrichtung 10 zusammengefügt, indem die Riemenzähne in die Profilrillen 3 eingreifen und die ebene Oberfläche des Zahnriemens an der ebenen Fläche 4 entlang gleitet und in der montierten Stellung entsprechend anliegt.

Aus Fig. 2 ist ersichtlich, daß an dem einen Rand der Profilrillen 3 ein Anschlag 5 in Form einer durchgehenden Wandung ausgebildet ist. Hierdurch wird beim Zusammenfügen von Zahnriemenende und Verbindungsvorrichtung 10 ein korrektes Einlegen des Zahnriemens dadurch erleichtert, daß dieser bis zum Anliegen an dem Anschlag 5 eingeschoben wird. In dem hier dargestellten Ausführungsbeispiel ist in dem dem Anschlag gegenüberliegenden Rand der Profilrillen in zwei der Profilrillen 3 ein Vorsprung 6 bzw. 7 vorgesehen. Diese Vorsprünge 6 bzw. 7 ragen in montierter Stellung des Zahnriemens nur so viel über das Oberflächenprofil der Riemenzähne heraus, daß der Zahnriemen aufgrund seiner Elastizität durch entsprechendes Pressen in die Verbindungsvorrichtung 10 gedrückt werden kann. Gegenüber der Vorsprünge befinden sich in der Wandung gemäß der hier beschriebenen Ausführungsform zwei Bohrungen 8 und 9, die mit den Profilrillen 3 fluchten.

Der Zahnriemen kann durch eine Fügebewegung in der Ebene der Lauffläche des Zahnriemens und in Richtung der Riemenzähne mit der Verbindungsvorrichtung zusammengefügt werden. Hierbei ist er in der hier dargestellten Ausführungsform eine entsprechende Presskraft notwendig, um die Widerstände der Vorsprünge 6 und 7 zu überwinden. Im zusammengefügten Zustand ist der Zahnriemen in Fügerichtung durch Formschluß einerseits durch den Anschlag 5 und andererseits durch die Vorsprünge 6 und 7 gesichert. In Zugrichtung besteht ebenfalls sicherer Formschluß, da die Profilrillen 3 in das Oberflächenprofil des Zahnriemens eingreifen. Der Zahnriemen kann von der Verbindungsvorrichtung 10 wieder gelöst werden, indem er mittels in der Zeichnung nicht näher dargestellten Stiften, die in die Bohrungen 8 und 9 eingesteckt werden entgegen dem Widerstand der Vorsprünge 6 und 7 heraustreibbar ist.

Aufgrund seiner vergleichsweise einfachen Formgebung kann die erfindungsgemäße Verbindungsvorrichtung als einteiliges Kunststoffspritzteil ausgeführt werden.

## Patentansprüche

1. Verbindungsvorrichtung (10) zur Aufnahme mindestens eines Endes eines profilbehafteten Antriebsmittels, vorzugsweise eines Zahnriemens oder einer Rollenkette, wobei die Verbindungsvorrichtung (10) ein negatives Abbild (3) des Oberflächenprofils des Antriebsmittels aufweist, in das das Antriebsmittel eingreift,
wobei das Ende des Antriebsmittels mit der Verbindungsvorrichtung (10) durch eine Fügebewegung in der Ebene der Lauffläche des Antriebsmittels und in Längsrichtung des Antriebsmittelprofils zusammenfügbar ist,
**dadurch gekennzeichnet,**
daß am Rand einer oder mehrerer Profilrillen (3) der Verbindungsvorrichtung (10) schmale Vorsprünge (6, 7) ausgebildet sind, über die das Antriebsmittel beim Zusammenfügen pressbar ist und die im zusammengefügten Zustand einen Formschluß zwischen Antriebsmittel und Verbindungsvorrichtung (10) in Fügerichtung herstellen.

2. Verbindungsvorrichtung nach Anspruch 1, dadurch gekennzeichnet, daß ein Anschlag (5) vorgesehen ist, über den die Lage des mit der Verbindungsvorrichtung (10) zusammengefügten Antriebsmittels in Fügerichtung festlegbar ist.

3. Verbindungsvorrichtung nach einem der Ansprüche 1 oder 2, dadurch gekennzeichnet, daß der Anschlag (5) mindestens eine Bohrung (8, 9) aufweist, die vorzugsweise mit einer Profilrille (3) fluchtet, an deren Rand ein schmaler Vorsprung (7) ausgebildet ist, so daß das Antriebsmittel mittels mindestens eines geeigneten Stiftes durch die mindestens eine Bohrung (9) aus der Verbindungsvorrichtung (10) wieder heraustreibbar ist.

4. Verbindungsvorrichtung nach Anspruch 1, dadurch gekennzeichnet, daß statt der Vorsprünge (6, 7) schmale Schnappfedern vorgesehen sind.

5. Verbindungsvorrichtung nach einem der Ansprüche 1 bis 4, dadurch gekennzeichnet, daß das mit der Verbindungsvorrichtung (10) zusammengefügte Antriebsmittel längs zur Fügerichtung durch Kraftschluß gesichert ist.

6. Verbindungsvorrichtung nach Anspruch 5, dadurch gekennzeichnet, daß der Kraftschluß durch die Reibung eines paßgenauen Sitzes zustandekommt.

7. Verbindungsvorrichtung nach einem der Ansprüche 1 bis 6, dadurch gekennzeichnet, daß das mit der Verbindungsvorrichtung (10) zusammengefügte Antriebsmittel längs zur Fügerichtung durch Stoffschluß gesichert ist.

8. Verbindungsvorrichtung nach Anspruch 7, dadurch gekennzeichnet, daß der Stoffschluß durch eine Klebeverbindung zustande kommt.

9. Verbindungsvorrichtung mit einem Zwischenteil (11) und zwei Endteilen (1, 1'), wobei die Endteile (1, 1') nach einem der Ansprüche 1 bis 8 ausgebildet sind.

## Claims

1. Connecting device (10) for receiving at least one end of a profiled driving means, preferably a toothed belt or a roller chain, the connecting device (10) having a negative image (3) of the surface profile of the driving means, the driving means engaging into the said negative image, and the end of the driving means being capable of being assembled together with the connecting device (10) by means of an assembling movement in the plane of the running surface of the driving means and in the longitudinal direction of the driving means profile, characterized in that, at the edge of one or more profile grooves (3) of the connecting device (10), narrow projections (6, 7) are formed, via which the driving means can be pressed during assembly and which, in the assembled state, make a positive connection between the driving means and the connecting device (10) in the assembling direction.

2. Connecting device according to Claim 1, characterized in that a stop (5) is provided, via which the position of the driving means assembled together with the connecting device (10) can be fixed in the assembling direction.

3. Connecting device according to one of Claims 1 or 2, characterized in that the stop (5) has at least one bore (8, 9) which is preferably in alignment with a profile groove (3), at the end of which a narrow projection (7) is formed, so that the driving means is capable of being driven out of the connecting device (10) again through the at least one bore (9) by means of at least one suitable pin.

4. Connecting device according to Claim 1, characterized in that narrow catch springs are provided instead of the projections (6, 7).

5. Connecting device according to one of Claims 1 to 4, characterized in that the driving means assembled together with the connecting device (10) is secured longitudinally to the assembling direction by means of a non-positive connection.

6. Connecting device according to Claim 5, characterized in that the non-positive connection is brought about by the friction of an exact fit.

7. Connecting device according to one of Claims 1 to 6, characterized in that the driving means assembled together with the connecting device (10) is secured longitudinally to the assembling direction by means of a material connection.

8. Connecting device according to Claim 7, characterized in that the material connection is brought about by an adhesive bond.

9. Connecting device with an intermediate part (11) and two end parts (1, 1'), the end parts (1, 1') being designed according to one of Claims 1 to 8.

## Revendications

1. Dispositif de liaison (10) pour recevoir au moins ure extrémité d'un moyen d'entraînement profilé, de préférence d'une courroie dentée ou d'une chaîne à rouleaux, où le dispositif de liaison (10) présente une image négative (3) du profil de surface du moyen d'entraînement, dans lequel s'engage le moyen d'entraînement,
où l'extrémité du moyen d'entraînement peut être assemblée avec le dispositif de liaison (10) par un mouvement d'assemblage dans le plan de la face de roulement du moyen d'entraînement et dans la direction longitudinale du profil de moyen d'entraînement, caractérisé
en ce que sont réalisés au bord d'une ou de plusieurs rainures profilées (3) du dispositif de liaison (10) des saillies étroites (5, 7) par dessus lesquelles le moyen d'entraînement, lors de l'asserrblage, peut être poussé et qui établissent à l'état assemblé une liaison par concordance des formes entre le moyen d'entraînement et le dispos tif de liaison (10) dans la direction d'assemblage.

2. Dispositif de liaison selon la revendication 1, caractérisé en ce qu'il est prévu une butée (5) par laquelle peut être fixée la position du moyen d'entraînement assemblé avec le dispositif de liaison (10) dans la direction dassemblage.

3. Dispositif de liaison selon l'une des revendications 1 ou 2, caractérisé en ce que la butée (5) présente au moins un perçage (8, 9) qui est aligné de préférence avec une rainure profilée (3) au bord de laquelle est réalisée une saillie étroite (7) de telle sorte que le moyen d'entraînement, au moyen d'au moins une goupille appropriée, peut être chassé à travers au moins un perçage précité (9) de nouveau hors du dispositif de liaison (10).

4. Dispositif de liaison selon la revendication 1, caractérisé en ce que des ressorts d'enclenchement étroits sont prévus à la place des saillies (6, 7).

5. Dispositif de liaison selon l'une des revendications 1 à 4, caractérisé en ce que le moyen d'entraînement assemblé avec le dispositif de liaison (10), longitudinalement à la direction d'assemblage, est assuré par une liaison par force.

6. Dispositif de liaison selon la revendication 5, caractérisé en ce que la liaison par force est produite par le frottement d'un ajustement précis.

7. Dispositif de liaison selon l'une des revendications 1 à 6, caractérisé en ce que le moyen d'entraînement assemblé avec le dispositif de liaison (10) est assuré longitudinalement à la direction d'assemblage par une liaison de matière.

8. Dispositif de liaison selon la revendication 7, caractérisé en ce que la liaison de matière est produite par une liaison par collage.

9. Dispositif de liaison avec une partie intermédiaire (11) et deux parties d'extrémité (1, 1') où les parties d'extrémité (1,1') sont réalisées selon l'une des revendications 1 à 8.
